# EUROPEAN PATENT SPECIFICATION

(11) **EP 2 661 942 B1**
(45) Date of publication and mention of the grant of the patent: **23.09.2015**
(21) Application number: 11700235.2
(22) Date of filing: 05.01.2011
(51) Int. Cl.: H04W 16/26, H04W 84/04

(54) **INTRA IP COMMUNICATION WITHIN A RELAY NODE FOR A RADIO TELECOMMUNICATION NETWORK**
INTRA-IP-KOMMUNIKATION IN EINEM RELAISKNOTEN FÜR EIN FUNKTELEKOMMUNIKATIONSNETZ
COMMUNICATION IP INTERNE DANS UN N UD DE RELAIS POUR RÉSEAU DE TÉLÉCOMMUNICATION RADIO

(43) Date of publication of application: 13.11.2013
(73) Proprietor: Nokia Solutions and Networks Oy, 02610 Espoo (FI)
(72) Inventor: HALFMANN, Ruediger, 67697 Otterberg (DE); RAAF, Bernhard, 82061 Neuried (DE); REDANA, Simone, 81541 Munich (DE)
(74) Representative: Borgström, Markus
(86) International application number: PCT/EP2011/050085
(87) International publication number: WO 2012/092966

(56) References cited:
- WO-A1-2009/021246
- US-A1- 2009 029 645
- US-A1- 2010 046 418

## Description

### Field of invention

The present invention relates to the field of relay nodes, which are used for radio telecommunication networks. Specifically, the present invention relates to different modules of a relay node, which are spatially separated from each other and which, in this document are denominated access module and a backhaul module. Thereby, the access module is configured for providing a radio connection with at least one user equipment and the backhaul module is configured for providing a radio connection with a (donor) base station of the relay node. Further, the present invention relates to a relay node comprising such an access module and such a backhaul module. Furthermore, the present invention relates to a radio message forwarding method, which is carried out with at least one of such a relay node.

### Art Background

A cost efficient solution for improving the performance of Long Term Evolution (LTE) and LTE-Advanced (LTE-A) telecommunication networks can be the utilization of relay nodes (RN), which allows installations without having terrestrial broadband access or the need to install a micro wave link. In a relay enhanced telecommunication network there are basically three different types of radio connections:
(A) A first type is the radio connection between a base station (BS), which in LTE technology is called an enhanced NodeB (eNB), and a RN. The RN serving BS is also called a donor BS. The respective cell is called a donor cell. The radio link between a BS and a RN is called a backhaul link.
(B) A second type is the radio connection between a BS and a User Equipment (UE). The radio link between a BS and a UE is called a direct link.
(C) A third type is the radio connection between a RN and a UE. The radio link between a RN and a UE is called an access link.

The 3rd Generation Partnership Project (3GPP) focuses within its rel.10 specification on so called "type 1" RNs which realize the relaying functionality on layer 3 (network layer) of the Open Systems Interconnection (OSI) model. Therefore, the RN could be more or less seen as a small BS with an integrated wireless backhaul. Within this document the relaying functionality will be separated into two major parts:
A) The backhaul part of the RN which includes the UE related protocol stacks for the backhaul.
B) The access part of the RN which includes the BS related protocol stacks for the realisation of the access link towards the UE.

In the written contribution "Support of indoor relays in LTE-Advanced" to the 3GPP meeting Rl-58b held at Miyazaki (JP) from October 10 to 16, 2009 it is proposed an indoor RN which can be made up from two distinct modules: a donor module (= backhaul module) being placed e.g. close to a window of a housing and a coverage module (= access module) being placed where coverage within a housing is needed. Both modules can be connected in a wireless way, using an outband connection (e.g. unlicensed 5 GHz band).

WO 2009/021246 relates to wireless communications and in particular to the use of an all-internet protocol in-building hybrid access point and relay station. Accordingly, in order to provide wireless services, a relay station is provided that incorporates a femtocell access point and is configured to combine a multi-service radio signal with a multi-service data stream received from the access point and transmit both to a user.

US 2009029645 relates to wireless networks and in particular to backhaul models that support a more distributed network of micro, pico and femto cells to allow for a more flexible and dynamic network management. Accordingly, a backhaul network divided into at least two tiers is proposed wherein, a first tier provides backhaul capabilities with one or more relay nodes from remote modules and a second tiers that allows relay nodes to communicate with a central hub for providing backhaul capabilities to the relay nodes and the remote modules.

US 2010046418 relates to wireless communications and in particular to relay architecture frameworks. Accordingly, in order to facilitate relaying communications between devices, communications over a backhaul link can be received over a plurality of backhaul link protocols.

There may be a need for improving the connection between a backhaul module and an access module within a RN.

### Summary of the Invention

This need may be met by the subject matter according to the independent claims. Advantageous embodiments of the present invention are described by the dependent claims.

According to a first aspect of the invention there is provided an access module for a relay node for a radio telecommunication network. The provided access module comprises (a) an access communication part for providing a radio connection between the relay node and at least one user equipment, and (b) an access interface for connecting the access module to a backhaul module of the relay node via an Internet Protocol network connection. Thereby, the access module and the backhaul module are spatially separated from each other.

The described access module for a relay node (RN) is based on the idea that a data communication within the RN, i.e. between the access module and the backhaul module, can be effectively realized by using internet protocol (IP) data packets. This may mean that compared to a higher level intra RN communication between the access module and the backhaul module the amount of data, which has to be forwarded between the two different modules of the RN, is comparatively small. This means that an IP (access) interface represents an optimal interface for connecting the two spatially separated parts of the RN with each other.

Descriptive speaking, according to the described invention two different spatially separated entities, i.e. the backhaul part and the access part, of a RN are connected with each other via any L1/L2 network supporting the transport of IP data. Thereby, L1 is the first layer (Layer 1) or the so called physical layer (PHY) of the Open Systems Interconnection (OSI) reference model. Further, L2 is the second layer (Layer 2) or the so called data link layer of the OSI reference model. With respect to radio telecommunication the Layer 2 may include data operations (a) within the so called Medium Access Control (MAC) layer of the OSI reference model, (b) within the so called Radio Link Control (RLC) layer and (c) within the Packet Data Convergence Protocol (PDCP).

In this respect it is mentioned that a communication via L1 and L2 is essential, because there must be a physical connection between the access module and the backhaul module in order to allow for a real data communication within the RN. However, a usage of protocols being assigned to layer 3 (network layer) of the OSI reference model is not necessary, because within the RN there is only a point to point communication between the access module and the backhaul module. It is not necessary to connect these modules with each other via a network comprising different paths between the access module and the backhaul module.

In this document the term RN may particularly denote a RN which comprises two jointly connected but spatially separated modules, i.e. the access module and the backhaul module. With the described usage of the IP for data communication between the access module and the backhaul module a new RN architecture is defined, which, depending on the place of location of the two modules, allows to improve the quality of the radio access link (a) between a user equipment (UE) and the access part and/or (b) between a (donor) base station (BS) and the backhaul module. This new RN architecture may be denominated a distributed RN.

In this respect a UE may be any type of communication end device, which is capable of connecting with an arbitrary telecommunication network access point such as a base station or a (distributed) relay node. Thereby, the connection may be established in particular via a wireless radio transmission link. In particular the user equipment may be a cellular mobile phone, a Personal Digital Assistant (PDA), a notebook computer and/or any other movable communication device.

It is mentioned that in order to be capable of transmitting and/or receiving radio data signals the access communication part, which is connected to the described IP access interface, may comprise usual Radio Frequency (RF) equipment such as an Analog to Digital Converter (ADC), a frequency mixing unit or a frequency converting unit, an RF amplifier and an antenna.

According to an embodiment of the invention the access interface is configured for connecting the access module to the backhaul module via a cable, in particular via an electric cable such as an Ethernet cable.

Since an IP based communication between the access module and the backhaul module is very effective with respect to the amount of data which has to be transferred between the two modules, a connection via a fiber is not necessary however not forbidden for operating the described RN.

The electric cable may be for instance any standard computer wiring such as e.g. an Ethernet cable. This may provide the advantage that already existing standard wiring, e.g. within a building, can be used for the IP based communication between the spatially separated modules within the RN. Further, even additional other data traffic may be carried by the standard computer wiring, provided that sufficient bandwidth is available for the connection between the two modules. This means that no dedicated cable is required for realizing the data connection between the two modules.

According to a further embodiment of the invention the access communication part comprises a data processor, which is configured in such a manner, that a data processing is carried out within all layers of the Open Systems Interconnection reference model. This may mean that it is possible that within the RN a higher level data processing involving the higher OSI layers is only performed within the data processor being assigned to the access module and not within a data processor being assigned to the backhaul module. This may provide the advantage that the whole data processing within the relay node can be realized in a very effective manner, because only within the access module full unpacking until and a full packing from the highest OSI layer (e.g. for the user plane of the GPRS Tunneling Protocol (GTP-U) layer and for the control plane the S1 Application Part (S1-AP) layer) is performed.

According to a further aspect of the invention there is provided a backhaul module for a relay node for a radio telecommunication network. The provided backhaul module comprises (a) a backhaul communication part for providing a radio connection between the relay node and a base station of the radio telecommunication network, and (b) a backhaul interface for connecting the backhaul module to an access module of the relay node via an Internet Protocol network connection. Thereby, the backhaul module and the access module are spatially separated from each other.

Also the described backhaul module for a RN is based on the idea that a data communication between the backhaul module and the access module can be effectively realized by using IP data packets. This may mean that compared to a higher level intra RN communication between the backhaul module and the access module the amount of data, which has to be forwarded between the two different modules, is comparatively small. This means that an IP (backhaul) interface represents also for the described backhaul module an optimal interface for connecting the two spatially separated parts of the RN with each other.

It is mentioned that the base station (BS) may also be called a donor BS (or Donor eNB, DeNB) because it is serving the RN and indirectly also all UE's which are currently attached via one or more radio connections to the RN.

It is further mentioned that in order to be capable of transmitting and/or receiving radio data signals the backhaul communication part, which is connected to the described IP backhaul interface, may comprise usual RF equipment such as an ADC, a frequency mixing unit or a frequency converting unit, an RF amplifier and an antenna.

According to an embodiment of the invention the backhaul interface is configured for connecting the backhaul module to the access module via a cable, in particular via an electric cable such as an Ethernet cable.

As has already been elucidated above with respect to the described access module the described IP based communication between the access module and the backhaul module is very effective and allows for using a standard cable wiring such as e.g. an Ethernet cable wiring.

According to a further embodiment of the invention the backhaul communication part comprises a data processor, which is configured in such a manner, that a data processing on the backhaul interface is carried out exclusively within the physical layer and the data link layer of the Open Systems Interconnection reference model. This may provide the advantage that the data processing within the backhaul module is restricted to data operations within the first two OSI layers. This makes the data processing within the backhaul module very effective.

As has already been elucidated above the second layer L2 may include the MAC Layer, the RLC layer and the PDCP layer.

According to a further aspect of the invention there is provided a relay node for a radio telecommunication network. The provided relay node comprises (a) an access module as described above and (b) a backhaul module as described above. Thereby, the access module and the backhaul module are spatially separated from each other and the access module and the backhaul module are connected by means of an internet protocol network connection via the access interface and the backhaul interface.

Also the described relay node is based on the idea that IP (access and backhaul) interfaces between the access module and the backhaul module allow for an effective data communication between these two modules. Thereby, the information can be transferred with a comparatively small amount of data such that a usual data cable, e.g. a standard electric cable wiring such as an Ethernet cable, is sufficient in order to provide a sufficient data connection between the access module and the backhaul module.

Specifically, by contrast to a RN comprising two spatially separated antennas, wherein one of the two antennas is connected via a long RF cable to the other components of the RN, in the described RN it is not necessary to exchange analogue Tx/Rx RF signals or digitized baseband signals between a disposed antenna set and a RN baseband processing unit. In fact existing standard wiring for IP networks e.g. Ethernet cable are sufficient in order to support the link between backhaul module and the access module of the RN, while special RF antenna cables would be required to connect remote antennas and typically fiber cables would be required to transfer baseband signals because of their higher data rate due to over sampling and overhead from additional lower OSI layer signals like reference signals, parity bits, control signals and so on.

According to an embodiment of the invention the relay node further comprises (a) at least one further access module as described above and/or (b) at least one further backhaul module as described above. This may mean that the architecture of the above described relay node can also be generalized to a M x N constellation, where M backhaul modules are connected to N access modules. Thereby, M and/or N may be any integer number greater or equal than one.

In such an M x N constellation each one of the M backhaul modules may be connected with each of the N access modules via a separate IP network connection.

A RN comprising at least two backhaul modules may provide the advantage that the RN is able to radio communicate via two different air interfaces with one BS or with more BSs. As the backhaul modules may even be physically separated from each other they may be able to communicate with different donor BSs (e.g. DeNBs). A RN comprising at least two access modules may provide the advantage that the RN is able to radio communicate via at least two different air interfaces with different UEs, which are located at different positions. Thereby, as the access modules may be physically separated from each other a first UE being located in a first position may have a better radio link connection to a first access module whereas a second UE being located in a second position may have a better radio link connection to a second access module.

For instance in a scenario where the RN is used in a large building having different floors (a) the backhaul module may be placed on top of the roof of the building in order to achieve a good radio connection with a BS and (b) respectively one access module may be placed in each floor in order to realize a good overall coverage for the radio access of UEs being located in different floors.

According to a further embodiment of the invention one of the backhaul module and the access module is configured for synchronizing the other one of the backhaul module and the access module via a synchronization signal, which is exchanged by using the internet protocol network connection via the access interface and the backhaul interface. This may provide the advantage that with the described RN one major characteristic of usual RNs can be preserved. This major characteristic is the capability of a RN to stay synchronized to the radio telecommunication network all the time.

Preferably, a timing of the backhaul module of the RN, which backhaul part synchronizes to the (donor) BS is distributed or shared among all connected access modules of the RN via the available L1/L2 interface. Since L1/L2 enables an IP transport network the known Network Time Protocol (NTP) such as e.g. RFC 4330, RFC 5905, RFC 1305 RFC 2783 could be used in order to provide the synchronization between backhaul module and the at least one access module. Thereby, within the RN an NTP server may receive the required timing from the backhaul module and an NTP client may provide the timing to the access part(s). However, it is mentioned that any kind of equivalent protocol to NTP which provides sufficient accuracy could be used for the described intra RN synchronization.

According to a further embodiment of the invention the backhaul module and the access module are configured to use an Internet Protocol secure tunneling for exchanging data between the backhaul module and the access module via the access interface and the backhaul interface. This may provide the advantage that without security concerns with respect to the confidentiality of the exchanged data also such a wiring may be used for the described RN, which wiring can also be used by other parties and/or entities. It is mentioned that, if security is already provided by other means, e.g. included in the GTP protocol, then additional security may not be necessary.

According to a further embodiment of the invention (a) the access module comprises an access memory for storing an IP address being assigned to the access module and/or (b) the backhaul module comprises a backhaul memory for storing an IP address being assigned to the backhaul module.

For the described RN a cell Identification (ID) may be assigned to the access module. Moreover, in the case of multiple access modules it may be preferable that each access module carries an own Cell ID but all access modules do own a common Group ID, which corresponds to the donor BS of the RN.

It is mentioned that a separate ID for the backhaul module may be optional. For the backhaul module one could e.g. reuse the UE ID of the UE-functionality of the backhaul module. Further, L2 respectively MAC addresses as well as IP address of the access module(s) may be mapped bijectively to the assigned cell IDs, i.e. there is a one to one mapping between the IP addresses and the assigned cell IDs.

In case different IP addresses are assigned to the backhaul module(s) and to the access module(s) it may be advantageous to make the IP address of the backhaul module(s) known to the access module(s). This could be done by a configuration at the access module, which configuration may be downloaded from a configuration server or by protocol mechanisms which could be initiated by a request of the access module(s) or a broadcast of the backhaul module IP address e.g. by the respective backhaul module.

According to a further embodiment of the invention (a) a data processing within the access communication part involves a first number of successional different layers of the Open Systems Interconnection reference model and (b) a data processing within the backhaul communication part involves a second number of successional different layers of the Open Systems Interconnection reference model. Thereby, the first number is different from the second number. This means that there is an asymmetry between the two modules, the backhaul module and the access module, with respect to the usage of the OSI protocol stacks.

Specifically, (a) the data processor of one of the access communication part and the backhaul communication part is configured in such a manner that a data processing is carried out within all layers of the Open Systems Interconnection reference model and (b) the data processor of the other of the access communication part and the backhaul communication part is configured in such a manner that a data processing is carried out exclusively within the physical layer and the data link layer of the OSI reference model. Preferably, the data processor of the access communication part may use all layers of the OSI reference model whereas the data processor of the backhaul communication part may use exclusively protocols being assigned to the physical layer and the data link layer of the OSI reference model.

The described asymmetry may be based on the fact that of course the digital radio communication at both ends of the relay node is performed within the PHY layer of the OSI reference model. Further, within the RN there will be also a data processing within the highest seventh OSI layer, which for radio telecommunication is associated with the so called User Plane GPRS Tunneling Protocol (GTP-U). This means that it may be possible that within one of the two modules the whole protocol stack ranging from the PHY layer up to the GTP-U layer is executed wherein in the other module only a part of the complete layer stack, i.e. L1 being associated with the OSI PHY layer and L2 being associated with the MAC, the RLC and the PDCP layers are executed. However, at least for some control functionality that is related to the backhaul module e.g. control of the radio resources on the backhaul module, corresponding packets can also be processed according to higher OSI layers of the stack within the backhaul module. This has the advantage that the corresponding information does not have to be transferred back from the access module to the backhaul module after processing in the higher OSI layers such that a capacity saving can be realized. However, as the control overhead is not expected to be significant as compared to the data rates, in particular for high bandwidth services, it is also feasible if the higher OSI level data processing is only carried out within one of the modules.

According to a further embodiment of the invention the access module is realized with a home base station (also called home eNB or HeNB). This may provide the advantage that the described RN could be realized with a rather small Hardware extension for the backhaul module compared to a home base station. The RN might provide coverage for instance during a roll out of a radio telecommunication system. Later on the home BS could be fed with a fiber cable and therefore be reconfigured to a "full" BS respectively a "full" eNB. It is mentioned that even a switching between these two different operational modes of the home BS might be possible.

The home BS station may be in particular an access point serving a home cell or a so called pico or femto cell. The home respectively the pico or femto cell may be for instance a small cellular region within the cellular telecommunication network. The home BS station serving the pico or femto cell may also be called a pico or femto access point and/or a pico or femto BS. The home BS is typically located at the premises of a customer of an internet service provider, of a customer of a mobile network operator and/or of a customer of any other telecommunication service provider.

The home BS may be a low cost, small and reasonably simple unit that can connect to a BS (in a Global System for Mobile communications (GSM) network) and/or to a core network (in a Long Term Evolution (LTE) network).

By contrast to a wide area (WA) BS the home BS is a much cheaper and less powerful device. This may hold in particular for the spatial coverage. The home BS may be designed for a maximal number of users respectively a maximal number of communication devices, which maximal number is typically between 5 and 20. By contrast thereto, a WA BS may be designed for serving much more users respectively communication devices. A WA BS may serve for instance 50, 100 or even more users respectively communication devices.

A further important difference between a home BS serving a home cell and a WA BS serving an overlay cell of a cellular telecommunication network can be seen in restricting the access of UEs. A home BS typically provides access to a closed user group and/or to predefined communication devices only. This may be achieved by a rights management system, which can be implemented in the home BS. With such a rights management system it may be prevented for instance that an unauthorized user can use a private and/or a corporate owned printer, which represents a communication device being assigned to the home BS. By contrast thereto, a WA BS provides an unlimited access for UEs provided that the user of the respective UE has a general contract with the operator of the corresponding mobile telecommunication network or at least with an operator, which itself has a basic agreement with the operator of the WA BS.

According to a further aspect of the invention there is described a method for forwarding a message within a radio telecommunication network by a relay node, in particular by a relay node as described above. The described method comprises (a) receiving the message by one of the access communication part and the backhaul communication part, (b) transmitting the message from the one of the access communication part and the backhaul communication part by means of an internet protocol network connection via the access interface and the backhaul interface to the other of the access communication part and the backhaul communication part, and (c) forwarding the message by the other of the access communication part and the backhaul communication part.

Also the described radio message forwarding method is based on the idea that by using an IP interface between the two spatially separated modules of the relay node the data communication within the RN can be carried out in an effective manner in particular with respect to the amount of data which has to transmitted between the two modules. Since the amount of data which has to be transmitted via the first and the second layer of the OSI reference model is small compared to a data transmission within higher OSI layers and/or by using protocols being assigned to higher OSI layers, usual electric cable wiring may be sufficient in order to connect the access module and the backhaul module of the RN with each other.

It is mentioned that the forwarded message may be the same as the received message. Alternatively, the RN may modify the message such that the forwarded message differs from the received message. Such a modification may be in particular a modification of a header of the message, which comprises an address of a recipient of the message. Preferably, the content of the message is not changed by the described radio message forwarding method.

According to a further aspect of the invention there is described a method for forwarding a message within a radio telecommunication network comprising a plurality of relay nodes, in particular comprising at least one relay node as described above, wherein the relay nodes are logically arranged in a successive manner within a communication path extending between a base station and a user equipment. The described method comprises (a) receiving the message by a receiving relay node from the plurality of relay nodes, wherein the message comprises an address of the user equipment, wherein the last relay node is directly connected with the user equipment, and (b) determining by the receiving relay node an address of a next relay node from the plurality of relay nodes, wherein the next relay node is directly connected to the receiving relay node.

Optionally, the received message may further comprise an address of a last relay node of the plurality of relay nodes. It is mentioned that at least in some use cases the address of the user might be enough and the address of the last RN might not be needed in order to find the route for the message.

The determining of the address of the next relay node may be carried out with the help of a routing table, which should be known by all RNs that need to forward packets, at least for all those RNs that are served directly or indirectly by that RN. In case the next RN is the same as the last RN, which is always the case if (a) the plurality of RNs comprises only two RNs and/or if (b) the receiving RN is the penultimate RN (connected to the UE via exclusively the last RN), the determining of the address can be realized simply by reading the address of the message, which address comprises the last RN within the communication path. Consequently RNs which only serve RNs which only serve UEs do not need a specific routing table, simplifying their design and configuration.

By contrast to a usual radio message forwarding method, wherein a message is forwarded downlink along a communication path comprising a plurality of RNs being logically arranged in a successive manner between a base station and a user equipment and wherein each RN transmits the message to the following RN with a header, which only comprises the final destination and the next RN (= the next hop), the described method may provide the advantage that only the BS and the last RN have to carry out a data processing within all layers of the OSI reference model. The other inner RNs may only carry out a data processing within the physical layer and the data link layer of the OSI reference model.

In other words, when employing the above described usual radio message forwarding method all the radio network elements within the communication path (i.e. the BS and all RN) have to completely unpack the message from the PHY layer until/up to the GTP-U layer of the OSI reference model. By contrast thereto, when employing the above described new method only the BS and the last RN have to completely unpack the message from the PHY layer until the GTP-U layer, whereas the other intermediate RNs only have to unpack the message from the physical layer until/up to the IP layer. This may provide the advantage that the overall computational effort for packing and unpacking the radio message can be significantly reduced.

Generally speaking, the above described RN can also be applied in a multi-hop scenario, wherein a plurality of relay nodes are involved, which are logically arranged in a successive manner within a communication path extending between a base station and a user equipment. The link between the BS and the RN and between different RNs is wireless and may comply to the LTE standard and therefore the L1/L2 protocols supporting the transport of IP data are the PHY layer, MAC layer, RLC layer and PDCP layer. In this case the (donor) BS could be aware of the entire tree and forward the radio message to the final RN by inserting the IP address of this RN. Then intermediate RNs do not have to implement specific donor BS functionality but can simply forward all packets to their destination IP address (and of course handle the packets directed to themselves as usual). This would simplify the design of the RNs in a multi-hop scenario. In this case the functionality at the donor BS is not much different from the case that all RNs were directly connected to the donor BS plus some routing table telling which first hop leads to which RN eventually. Therefore, the complexity increase within the donor BS is only marginal.

According to a further aspect of the invention there is provided a computer program for operating at least one relay node as described above. The computer program, when being executed by a data processor, is adapted for controlling and/or for carrying out any one of the above described radio message forwarding methods.

As used herein, reference to a computer program is intended to be equivalent to a reference to a program element and/or to a computer readable medium containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a basic setup for a relay node comprising two access modules, which are connected to a backhaul module via an electric wire.
- Figure 2: shows a diagram illustrating the synchronization flow within a relay node comprising one backhaul module and two access modules.
- Figure 3: shows a relay node, wherein the access module is realized with a femto base station.
- Figure 4: shows a relay node comprising three access modules, wherein each access module serves an own sector of the relay node.
- Figure 5: shows a relay node being installed at a multi floor building, wherein the backhaul module of the relay node is located at the roof of the building and respectively one access module is used for providing a spatial radio coverage within one floor.
- Figure 6: shows a User Plane protocol stack for processing a radio packet within a communication path comprising a user equipment, a relay node comprising two access modules, a donor base station and a serving Gateway connecting the donor base station to an IP core network.
- Figure 7: shows a Control Plane protocol stack for processing a control message within a communication path comprising a user equipment, a relay node comprising one access module, a donor base station and a Mobility Management Entity connecting the donor base station to an IP core network.
- Figure 8: illustrates three different User Plane protocol stack processing procedures of a radio packet within a communication path comprising a user equipment, two nested relay nodes, a donor base station and a serving Gateway connecting the donor base station to an IP core network.

### Detailed Description

The illustration in the drawing is schematically. It is noted that in different figures, similar or identical elements are provided with the same reference signs or with reference signs, which are different from the corresponding reference signs only within the first digit.

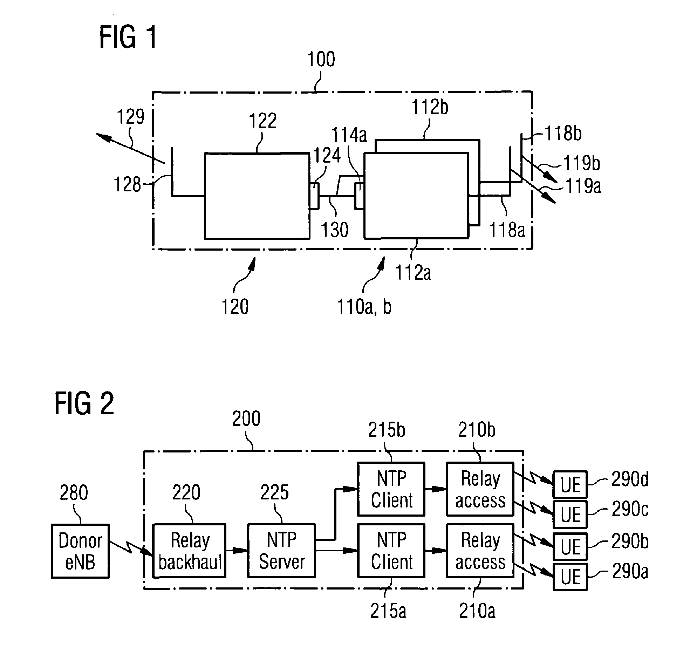

Figure 1 shows a relay node (RN) 100 in accordance with an embodiment of the invention. According to the embodiment described here the RN 100 comprises one backhaul module 120 and two access modules 110a and 110b.

The backhaul module 120 comprises a backhaul communication part 122 for providing a radio connection between the RN 100 and a not depicted base station (BS) of a radio telecommunication network. The corresponding radio link, which extends between an antenna 128 of the backhaul module 120 and the BS, is called a backhaul link 129. The backhaul module 120 further comprises a backhaul interface 124 for connecting the backhaul module 120 to the two access modules 110a and 110b of the RN 100.

Each of the two access modules 110a, 110b comprises an access communication part 112a respectively 112b and an access interface, wherein in Figure 1 only the access interface 114a, which is assigned to the access module 110a, can be seen. The two access interfaces are configured for connecting the respective access module 110a or 110b to the backhaul module 120. Further, as can be seen from Figure 1, each of the two access modules 110a, 110b comprises an antenna 118a, 118b, which represents an end point for an access link 119a, 119b extending between a respective user equipment (UE) (not depicted) and the respective access communication part 112a, 112b.

In accordance with the present invention each access interface and the backhaul interface 124 are configured for exchanging IP data packets via layer 1 and layer 2 of the Open Systems Interconnection (OSI) reference model. This means that between the backhaul module 120 and the two access modules 110a, 110b there is established an Internet Protocol network connection.

When using layer 1 and layer 2 of the OSI reference model the amount of data, which has to be exchanged between the backhaul module 120 on the one side and the access modules 110a, 110b on the other side is smaller than the amount of data which would have to be exchanged in case a higher OSI level communication would be used between the backhaul module 120 and the two access modules 110a, 110b. Therefore, it is sufficient to use an electric wire 130 for connecting the backhaul module 120 with the two access modules 110a, 110b. A fiber connection is not necessary however of course also not forbidden. According to the embodiment described here the electric wire is a standard Ethernet cable 130.

According to the embodiment described here the backhaul module 120 on the one side and the two access modules 110a, 110b on the other side are spatially separated from each other. Therefore, the RN 100 may be denominated a distributed RN.

Figure 2 shows a diagram illustrating the synchronization flow within a relay node 200 comprising one backhaul module 220 and two access modules 210a and 210b. According to the scenario described here each of the two access modules 210a and 210b is radio connected with two UEs 290a, 290b respectively 290c, 290d.

According to the embodiment described here the backhaul module 220 synchronizes with a donor base station (BS) 280. A Network Timing Protocol (NTP) Server 225, which is assigned to the backhaul module 220, provides synchronization messages to two NTP Clients 215a and 215b. The NTP Client 215a is assigned to the access module 210a and the NTP Client 215b is assigned to the access module 210b. The synchronization messages are exchanged via the above described Internet Protocol network connection (layer 1/layer2 connection) between the backhaul module 220 and the two access modules 210a, 210b.

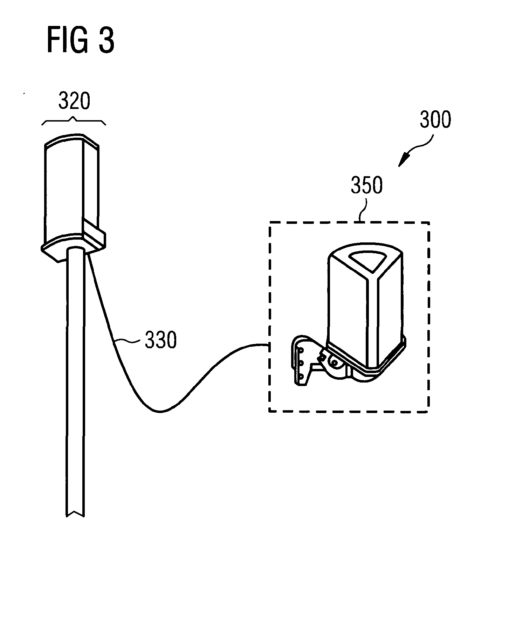

Figure 3 shows a relay node 300, wherein the access module is realized with a femto base station 350. According to the embodiment described here the femto base station 350 is connected via an Ethernet cable 330 with a backhaul module 320, which comprises an antenna and an integrated backhaul communication part.

It is mentioned that the architecture illustrated in Figure 3 may also allow for a dual mode operation of the femto base station 350. With a rather small Hardware extension for the required backhaul module 320 a relay function of a RN can be provided with a usual femto base station. Such a distributed RN 300 might provide a radio coverage for instance during a roll out of a radio telecommunication system. Later on the femto base station could be fed with a fiber cable or an Ethernet cable in a usual manner. Thereby, the "access module" of the RN 300 would be reconfigured to a "full" home BS.

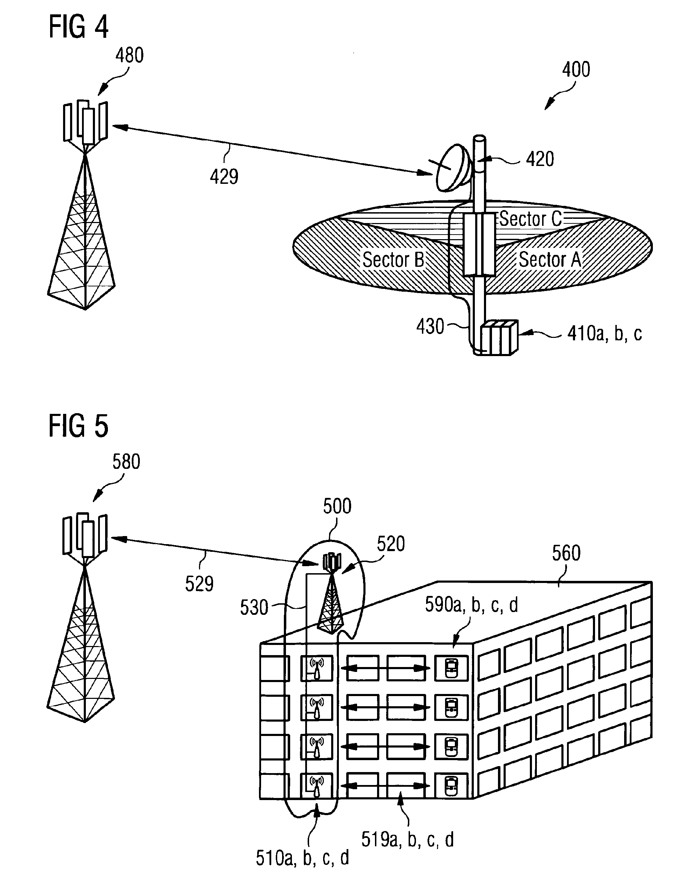

Figure 4 shows a RN 400 comprising three access modules 410a, 410b and 410c. Each access module 410a,b,c is assigned to one spatial sector of the RN 400. The three access modules 410a, 410b and 410c are connected to a backhaul module 420 via an electric wire respectively an Ethernet cable 430. The backhaul module 420 comprises an antenna and an integrated backhaul communication part. Between (a) the backhaul module 420 respectively its antenna and (b) a donor BS 480 there is established a so called backhaul radio link 429.

Figure 5 shows a RN 500 being installed at a multi floor building 560. According to the embodiment described here a backhaul module 520 of the RN 500 is installed at the roof of the building 560 in order to provide a good radio connection via a backhaul radio link 529 extending between a donor BS 680 and the RN 500.

Apart from the backhaul module 520 the RN 500 further comprises four access modules 510a, 510b, 510c and 510d, which are all connected to the backhaul module 520 via an Ethernet cable 530. Again, appropriate interfaces at the backhaul module 520 and at the various access modules 510a-d ensure, that an Internet Protocol network connection relying on OSI layer 1 / OSI layer 2 data processing is established between the backhaul module 520 and the various access modules 510a-d.

As can be seen from Figure 5, respectively one of the access modules 510a-d is installed at one floor of the building 560. The entirety of the access modules 510a-d provides a high quality radio coverage within all floors of the building 560. In Figure 5 the respective access links to user equipments 590a-d are denominated with reference numerals 519a-d, respectively.

The RN 500 described and illustrated herein is based on the idea that due to a massive radio signal strength penetration loss between the different floors of the building 560 it is advantageous to install an access module 510a, b, c, d on each floor. By contrast to the access modules 510a, b, c, d the backhaul module 520 could be installed on an upper floor or even on the roof of the building 560, therefore, guaranteeing a good signal reception from the donor BS respectively the donor eNB 580. Particularly, the outdoor installation of the donor BS respectively the donor eNB 580 avoids a high penetration loss (up to 20 dB) when radio signals penetrate inside the building. Furthermore, due to the above described IP interface between the backhaul module 520 and the various access modules 510a-d, a standard wiring of the building e.g. Ethernet cables 530 could be reused in order to connect the different entities of the RN 500. Instead of deploying access modules in different floors of a building, they may be deployed in different wings or other parts of the building or of several buildings connected via the cable.

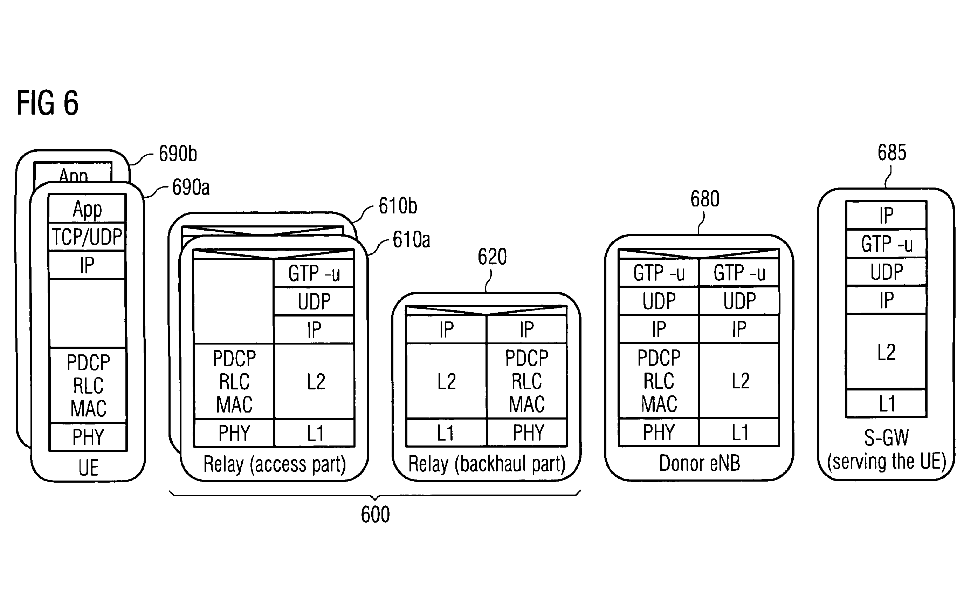

Figure 6 shows a User Plane protocol stack for processing a radio packet which is exchanged between a UE and a serving gateway. As usual, the serving gateway is used for providing a data connection to an IP core network (not shown in Figure 6).

In the following the execution of the protocol stacks is described for data, which are transferred uplink (a) from one of two UEs 690a, 690b via (b) a RN 600 comprising two access modules 610a,610b and one backhaul module 620 and (c) a donor BS 680 to (d) a serving gateway 685. In case of a downlink data transmission the sequence of the protocols has to be executed in the reversed direction.

As can be seen from Figure 6 illustrating an uplink data transmission, data being associated with any arbitrary message are provided to one of the UEs 690a, 690b via the Layer 7 respectively the Application layer (App.) of the OSI reference model. In accordance with the OSI reference model, within the UE 690a or 690b, the data are sequentially packed and/or processed via different layers, i.e. the Transport Control Protocol (TCP) / User Diagram Protocol (UDP) layer, the Internet Protocol (IP) layer, the Packet Data Convergence Protocol (PDCP) layer, the Radio Link Control (RLC) layer and the Medium Access Control (MAC) layer, into the physical (PHY) layer. Data being associated with the physical layer are then transferred via the air interface to the access module 610a or the access module 610b of the RN 600. Within the respective access module the data being assigned to the PHY layer are sequentially unpacked via the MAC layer, the RLC layer and the PDCP layer until they are converted i.e. packed into the GPRS Tunneling Protocol (User Plane) (GTP-U) layer.

In the following the data are again sequentially packed via the User Diagram Protocol (UDP) layer into the IP layer. In accordance with the invention described in this document, IP packets, which correspond to the packed data, are forwarded via a layer 1 (L1) / layer 2 (L2) IP network connection from the access module 610a or 610b to the backhaul nodule 620. For this data forwarding a usual Ethernet cable may be used.

At the backhaul module 620, there is again carried out a protocol stack data processing, wherein the received IP data packets are sequentially converted respectively packed via the IP layer, the PDCP layer, the RLC layer and the MAC layer into data being assigned to the PHY layer.

It is pointed out that the data processing within the IP layer is not obligatory in any case. In particular, if the RN comprises only one access module (e.g. 610a) it is clear that the destination entity of data being forwarded by the backhaul module 620 in a downlink direction is this access module. However, when the RN comprises at least two access modules an IP processing carried out within the backhaul module may be helpful in order to facilitate a data addressing within the RN.

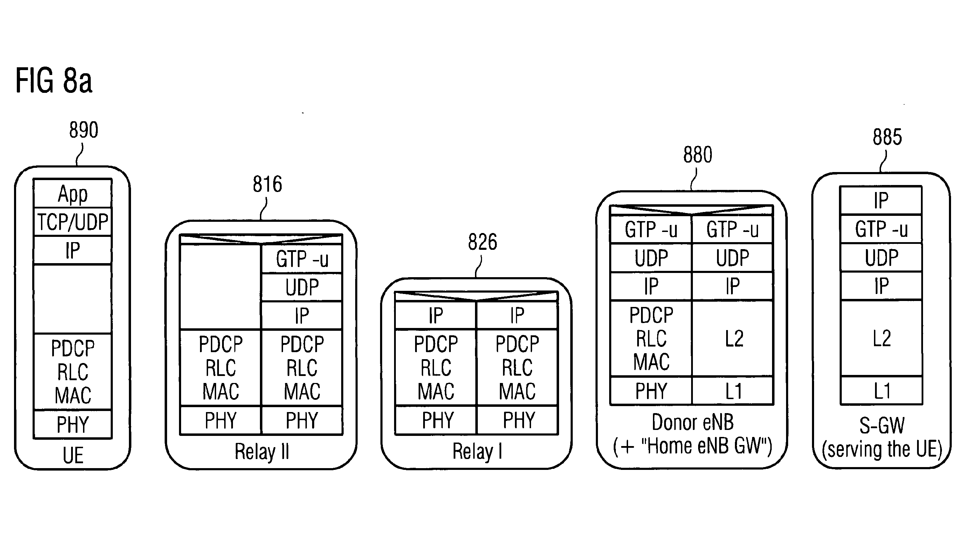

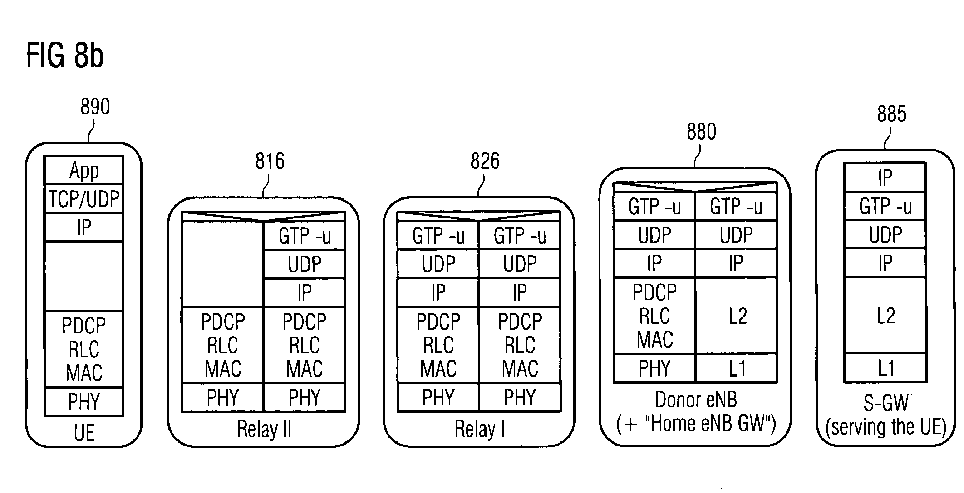

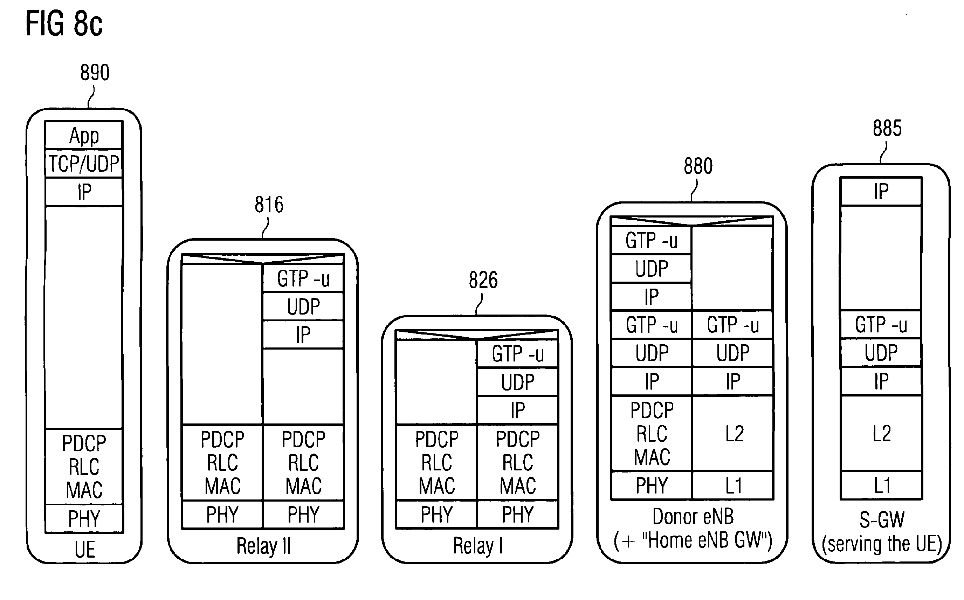

It is further pointed out that an IP layer processing might be required if there are two or more RNs, which are logically arranged in a successive manner within a communication path extending between a BS and a UE (see multi-hop scenario described below and illustrated in Figures 8a, 8b, 8c). In this case one can consider the backhaul module as to represent a first RN and the access module as to represent a second RN, which is radio connected to the first RN. If in this case there is also a UE, which is directly connected to the first RN then IP layer processing may be needed in order to correctly route (downlink) data packets from the first RN either to the second RN or to the UE being directly connected to the first RN.

The PHY data being provided by the backhaul module 620 are then again transmitted via an air interface extending between the backhaul module 620 and the donor BS 680 to the donor BS 680. As can be seen from Figure 6, within the donor BS 680 the received physical data are again unpacked via the MAC layer, the RLC layer, the PDCP layer, the IP layer and the UDP layer into the GTP-U layer. After a processing of the data within this layer again a packing respectively a converting of the data is carried out via the UDP layer into the IP layer. As usual, the corresponding IP data are then forwarded via an L1/L2 network connection to the serving gateway 685.

At the serving gateway 685 again a sequential data unpacking is carried out via the UDP layer and the GTP-U layer. Finally, an IP data packet is present at the serving gateway 685, which is the same as the IP data packet, which was present within the UE 690a or 690b (see IP layer between the TCP/UDP layer and the PDCP layer).

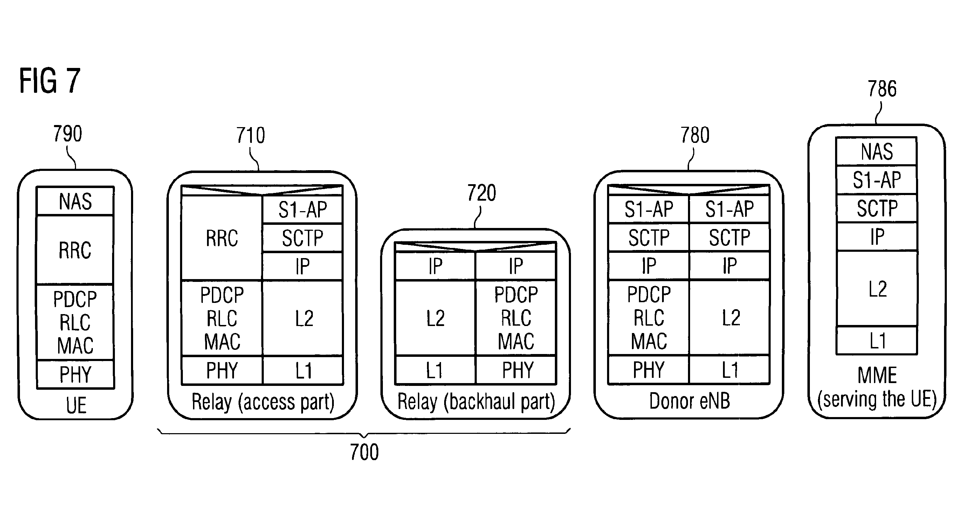

Figure 7 shows a Control Plane protocol stack for processing a control message within a communication path comprising a UE 790, a RN 700 comprising one access module 710 and one backhaul module 720, a donor base station 780 and a Mobility Management Entity (MME) 786 connecting the donor base station to a not depicted IP core network. Again, an uplink transmission of a control message from the UE 790 to the MME 786 will be regarded. It is mentioned that in case of a downlink control message the following described protocol stacks have to be executed on the reversed order.

As can be seen from Figure 7, a control command is provided within the UE 790 or to the UE 790 via the known Non Access Stratum (NAS) layer. In the following a sequential packing of the data corresponding to the control command is carried out via the Radio Resource Control (RRC) layer, the PDCP layer, the RLC layer and the MAC layer into the PHY layer. Within the PHY layer the respective data are transmitted via an air interface to the access module 710 of the RN 700.

Within the access module 710 a sequential unpacking of the control data is executed via the MAC layer, the RLC layer, the PDCP layer and the RRC layer until they are converted into the S1-Application Protocol (S1-AP) layer.

After processing the control data they are again sequentially packed via the Stream Control Transmission Protocol (SCTP) layer into the IP layer. In accordance with the invention described in this document IP packets, which correspond to the packed control data, are forwarded via a layer 1 (L1) / layer 2 (L2) IP network connection from the access module 710 to the backhaul nodule 720. For this data forwarding a usual Ethernet cable may be used.

At the backhaul module 720, there is again carried out a protocol stack control data processing, wherein the received IP data packets are sequentially converted and/or packed via the IP layer, the PDCP layer, the RLC layer and the MAC layer into control data being assigned to the PHY layer.

It is again pointed out that the data processing within the IP layer is not in all use cases obligatory. In particular, if the RN comprises only one access module as shown in Figure 7 the destination entity of data being forwarded by the backhaul module 720 in a downlink direction is the one and only access module 710. However, when the RN comprises at least two access modules an IP processing carried out within the backhaul module may be helpful in order to facilitate a data addressing within the RN.

It is further pointed out that in case of a multi-hop scenario as mentioned above and as illustrated below in Figures 8a, 8b and 8c, wherein the backhaul module 720 represents a first RN and the access module 710 represents a second RN and wherein there is also a UE, which is directly connected to the first RN, then IP layer processing may be needed in order to correctly route (downlink) data packets from the first RN either to the second RN or to the mentioned UE.

These control data being provided by the backhaul module 720 are then again transmitted via an air interface extending between the backhaul module 720 and the donor BS 780 to the donor BS 780. As can be seen from Figure 7, within the donor BS 780 the received physical data are again unpacked via the MAC layer, the RLC layer, the PDCP layer, the IP layer and the SCTP layer into the S1-AP layer. After a processing of the data within this layer again a packing respectively a converting of the data is carried out via the SCTP layer into the IP layer. As usual, the corresponding IP data are then forwarded via an L1/L2 network connection to the MME 786.

At the MME 786 again a sequential data unpacking is carried out via the SCTP layer and the S1-AP layer into the NAS layer. Thereby, within the NAS layer of the MME 786 there is present the same control message which was present within the NAS layer of the UE 790.

Figures 8a, 8b and 8c illustrate three different User Plane protocol stack processing procedures of a radio packet within a communication path comprising a user equipment 890, two nested RNs 816 and 826, a donor BS 880 and a serving Gateway 885 connecting the donor BS 880 to a non depicted IP core network. Due to the two RNs, a first RN 826 and a second RN 816, which are connected in series within the communication path, the described embodiment(s) represent a multi-hop scenario. However, it is pointed out that the described scenarios can of course also be extended to more than two up to N nested RNs. Thereby, N may be any integer number being larger than two. It is further pointed out that from the Figures 8a, 8b and 8c a person skilled in the art will have no problems to derive the corresponding protocol stack for the Control Plane.

The scenario illustrated in Figure 8a predominantly corresponds to the scenario shown in Figure 6, wherein the second RN 816 corresponds to one of the access modules 610a, 610b of the RN 600 and wherein the first RN 826 corresponds to the backhaul module 620 of the RN 600. Therefore, at this point reference is made to the above given description of Figure 6. However, by contrast to the scenario shown in Figure 6, in the scenario illustrated in Figure 8 the donor BS 880 acts as a proxy respectively proxy server and the first RN 826 acts as a router. Further, as compared to the scenario shown in Figure 6 instead of the layer L1 and layer L2 of the OSI reference model the LTE PHY and the radio protocols MAC, RLC and PDCP are used (a) on the left side of the protocol stack being assigned to the first RN 826 and (b) on the right side of the protocol stack being assigned to the second RN 816. Further, for connecting the two RNs 816 and 826 with each other a processing within the IP layer is added. In the scenario illustrated in Figure 8a the second RN 816 looks as being connected directly to the donor BS 880.

As can be seen from comparing Figures 6 and 8, both processing stacks show similarities due to the application of the same basic idea. The backhaul module 620 and the access module 610a/610b of the RN 600 shown in Figure 6 correspond to the first RN 826 connected directly to the donor BS 880 and the second RN 816 that serves the UE 890, respectively. Although within the set of involved RNs 826 and 816 the first RN 826 provides the backhaul and the second RN 816 provides the access for the set of involved RN 826, 816, these RNs would typically not be called "backhaul relay" or "access relay". The Ethernet link in between the two modules 610a/610b and 620 corresponds to the wireless link between the first RN 826 and the second RN 816.

It is mentioned that although not shown in Figure 8 there may be multiple RNs connected to the intermediate RN 826 in a similar way as was shown in figure 6. There are also differences due to the different scenarios, in particular due to using a different connection technology to interconnect the two relays: The connection between the backhaul module 620 and the access module 610a/610b of the RN 600 is done via L1 and L2, typically by means of an Ethernet cable, while the corresponding wireless protocols PHY, MAC, RRC, PDCP are used for the multi-hop RN 826 and 816, as a wireless connection is used there. Note that also for a RN different interconnection technologies could be used and the corresponding protocol stacks do not affect the basic concept of the invention described in this document.

It is further mentioned that at least one further UE (not shown in Figures 8a, 8b and 8c) can also be connected directly to the intermediate first RN 826. In this case the first RN 826 will need to implement and execute the corresponding protocol stack entities for this UE (i.e. GTP-u and UDP), but these protocol stack entities do not have to be processed in the intermediate RN 826 (or more generally speaking in all intermediate relays in case more than two RNs are chained within the communication path) for the data packets being assigned to UEs, which are connected to a final RN because these protocols are terminated in the final RN.

The scenario illustrated in Figure 8b corresponds to the scenario illustrated in Figure 8a, wherein, however, the first RN 826 acts as a further proxy. This means that the first RN 826 acts as a donor BS for the second RN 816 and processes the same protocol stack implementing the S1/X2 proxy and including the UDP layer and the GTP-U layer on both sides of the protocol stack being processed within the first RN 826. At present this scenario can be considered as to represent the most straight forward solution for implementing multi-hop starting from the current two-hop RN architecture.

In the scenario illustrated in Figure 8c the first RN 826 is transparent for the GTP-u association terminated in the second RN 816. The GTP-u processing between the donor BS 880 and the second RN 816 is encapsulated respectively tunneled within another GTP-u processing between the donor BS 880 and the first RN 826. In this way the first RN 826 is transparent. In accordance with the scenario illustrated in Figure 8a, the second RN 816 looks like as being directly connected to the donor BS 880.

It should be noted that within this document the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

### List of reference signs:

- 100: relay node
- 110a,b: access modules
- 112a: access communication part
- 112b: access communication part
- 114a: access interface
- 118a: antenna
- 118b: antenna
- 119a: access link to user equipment
- 119b: access link to user equipment
- 120: backhaul module
- 122: backhaul communication part
- 124: backhaul interface
- 128: antenna
- 129: backhaul link / relay link to base station
- 130: electric wire / Ethernet cable

- 200: relay node
- 210a: access module
- 210b: access module
- 215a: Network Timing Protocol (NTP) Client
- 215b: Network Timing Protocol (NTP) Client
- 220: backhaul module
- 225: Network Timing Protocol (NTP) Server
- 280: donor base station (BS) / donor eNB
- 290a,b,c,d: user equipments

- 300: relay node
- 320: backhaul module (antenna + integrated backhaul communication part)
- 330: electric wire / Ethernet cable
- 350: pico base station

- 400: relay node
- 410a,b,c: access module
- 420: backhaul module (antenna + integrated backhaul communication part)

- 429: backhaul link / relay link to base station
- 430: electric wire / Ethernet cable
- 480: donor base station (BS) / donor eNB

- 500: relay node
- 510a,b,c,d: access modules
- 519a,b,c,d: access link to user equipment
- 520: backhaul module
- 529: backhaul radio link / relay link to base station
- 530: electric wire / Ethernet cable
- 560: building / multi-floor building
- 580: donor base station (BS) / donor eNB
- 590a,b,c,d: user equipments

- 600: relay node
- 610a,b: access modules
- 620: backhaul module
- 680: donor base station (BS) / donor eNB
- 685: serving gateway
- 690a,b: user equipments

- 700: relay node
- 710: access modules
- 720: backhaul module
- 780: donor base station (BS) / donor eNB
- 786: Mobility Management Entity (MME)
- 790: user equipment

- 816: second relay node
- 826: first relay node
- 880: donor base station (BS) / donor eNB
- 885: serving gateway
- 890: user equipments

## Claims

1. A relay node for a radio telecommunication network, the relay node (100, 200, 300, 400, 500, 600, 700) comprising
an access module (110a, 210a, 410a, 510a, 610a, 710) comprising an access communication part (112a) for providing a radio connection between the relay node (100, 200, 300, 400, 500, 600, 700) and at least one user equipment (290a/b, 590a, 690a, 790) and
a backhaul module (120, 220, 320, 420, 520, 620, 720), comprising
a backhaul communication part (122) for providing a radio connection between the relay node (100, 200, 300, 400, 500, 600, 700) and a base station (280, 480, 580, 680, 780) of the radio telecommunication network, wherein the access module (110a, 210a, 410a, 510a, 610a, 710) and the backhaul module (120, 220, 320, 420, 520, 620, 720) are spatially separated from each other, the access module (110a, 210a, 410a, 510a, 610a, 710) and the backhaul module (120, 220, 320, 420, 520, 620, 720) are connected by means of an internet protocol network connection via an access interface (114a) and a backhaul interface (124), **characterized in that** the access communication part (112a) comprises a data processor, which is configured in such a manner, that a data processing is carried out within all layers of the Open Systems Interconnection reference model and the backhaul communication part (122) comprises a data processor, which is configured in such a manner, that a data processing on the backhaul interface (124) is carried out exclusively within the physical layer and the data link layer of the Open Systems Interconnection reference model.

2. The relay node as set forth in the preceding claim, further comprising
at least one further access module (110b, 210b, 410b/c, 510b/c/d, 610b) as set forth in claim 1 and/or at least one further backhaul module as set forth claim 1.

3. The relay node as set forth in any one of the preceding claims 1 to 2, wherein
one of the backhaul module (120, 220, 320, 420, 520, 620, 720) and the access module (110a, 210a, 410a, 510a, 610a, 710) is configured for synchronizing the other one of the backhaul module (120, 220, 320, 420, 520, 620, 720) and the access module (110a, 210a, 410a, 510a, 610a, 710) via a synchronization signal, which is exchanged by using the internet protocol network connection via the access interface (114a) and the backhaul interface (124).

4. The relay node as set forth in any one of the preceding claims 1 to 3, wherein
the backhaul module (120, 220, 320, 420, 520, 620, 720) and the access module (110a, 210a, 410a, 510a, 610a, 710) are configured to use an Internet Protocol secure tunneling for exchanging data between the backhaul module (120, 220, 320, 420, 520, 620, 720) and the access module (110a, 210a, 410a, 510a, 610a, 710) via the access interface (114a) and the backhaul interface (124).

5. The relay node as set forth in any one of the preceding claims 1 to 4, wherein
the access module (110a, 210a, 410a, 510a, 610a, 710) comprises an access memory for storing an IP address being assigned to the access module (110a, 210a, 410a, 510a, 610a, 710) and/or
the backhaul module (120, 220, 320, 420, 520, 620, 720) comprises a backhaul memory for storing an IP address being assigned to the backhaul module (120, 220, 320, 420, 520, 620, 720).

6. The relay node as set forth in any one of the preceding claims 1 to 5, wherein
a data processing within the access communication part (122) involves a first number of successional different layers of the Open Systems Interconnection reference model and
a data processing within the backhaul communication part (112a/b) involves a second number of successional different layers of the Open Systems Interconnection reference model, wherein the first number is different from the second number.

7. The relay node as set forth in any one of the preceding claims 1 to 6, wherein
the access module (110a, 210a, 410a, 510a, 610a, 710) is realized with a home base station (350).

8. The relay node according to claim 1, wherein the access interface (114a) is configured for connecting the access module (110a, 210a, 410a, 510a, 610a, 710) to the backhaul module (120, 220, 320, 420, 520, 620, 720) via a cable (130, 330, 430, 530).

9. The relay node according to claim 1, wherein the backhaul interface (124) is configured for connecting the access module (110a, 210a, 410a, 510a, 610a, 710) to the backhaul module (120, 220, 320, 420, 520, 620, 720) via a cable (130, 330, 430, 530).

10. A method for forwarding a message within a radio telecommunication network by a relay node (100, 200, 300, 400, 500, 600, 700), the relay node (100, 200, 300, 400, 500, 600, 700) comprising an access module (110a, 210a, 410a, 510a, 610a, 710) comprising an access communication part (112a) for providing a radio connection between the relay node (100, 200, 300, 400, 500, 600, 700) and at least one user equipment (290a/b, 590a, 690a, 790) and a backhaul module (120, 220, 320, 420, 520, 620, 720), comprising a backhaul communication part (122) for providing a radio connection between the relay node (100, 200, 300, 400, 500, 600, 700) and a base station (280, 480, 580, 680, 780) of the radio telecommunication network, the access module (110a, 210a, 410a, 510a, 610a, 710) and backhaul module (120, 220, 320, 420, 520, 620, 720) being spatially separated from each other, the access module (110a, 210a, 410a, 510a, 610a, 710) and the backhaul module (120, 220, 320, 420, 520, 620, 720) are connected by means of an internet protocol network connection via an access interface (114a) and a backhaul interface (124),
the method comprising
receiving the message by one of the access communication part (112a) and the backhaul communication part (122),
transmitting the message from the one of the access communication part (112a) and the backhaul communication part (122) by means of an internet protocol network connection via the access interface (114a) and the backhaul interface (124) to the other of the access communication part (112a) and the backhaul communication part (122), and
forwarding the message by the other of the access communication part (112a) and the backhaul communication part (122), **characterized in that**,
processing data at the access communication part (112a) is carried out within all layers of the Open Systems Interconnection reference model while processing data at the backhaul communication part (122) is carried out exclusively within the physical layer and the data link layer of the Open Systems Interconnection reference model.

## Patentansprüche

1. Weiterleitungsknoten für ein Funktelekommunikationsnetz, wobei der Weiterleitungsknoten (100, 200, 300, 400, 500, 600, 700) Folgendes umfasst:
ein Zugriffsmodul (110a, 210a, 410a, 510a, 610a, 710), das einen Zugriffskommunikationsteil (112a) zum Bereitstellen einer Funkverbindung zwischen dem Weiterleitungsknoten (100, 200, 300, 400, 500, 600, 700) und wenigstens einem Anwendergerät (290a/b, 590a, 690a, 790) enthält, und
ein Backhaul-Modul (120, 220, 320, 420, 520, 620, 720), das umfasst:
einen Backhaul-Kommunikationsteil (122) zum Bereitstellen einer Funkverbindung zwischen dem Weiterleitungsknoten (100, 200, 300, 400, 500, 600, 700) und einer Basisstation (280, 480, 580, 680, 780) des Funktelekommunikationsnetzes, wobei das Zugriffsmodul (110a, 210a, 410a, 510a, 610a, 710) und das Backhaul-Modul (120, 220, 320, 420, 520, 620, 720) räumlich voneinander getrennt sind, wobei das Zugriffsmodul (110a, 210a, 410a, 510a, 610a, 710) und das Backhaul-Modul (120, 220, 320, 420, 520, 620, 720) mittels einer Internetprotokoll-Netzverbindung über eine Zugriffsschnittstelle (114a) und eine Backhaul-Schnittstelle (124) verbunden sind, **dadurch gekennzeichnet, dass** der Zugriffskommunikationsteil (112a) einen Datenprozessor umfasst, der in der Weise konfiguriert ist, dass eine Datenverarbeitung in allen Schichten des "Open Systems Interconnection"-Referenzmodells ausgeführt wird, und der Backhaul-Kommunikationsteil (122) einen Datenprozessor umfasst, der in der Weise konfiguriert ist, dass eine Datenverarbeitung an der Backhaul-Schnittstelle (124) ausschließlich in der physikalischen Schicht und in der Datenverbindungsschicht des "Open Systems Interconnection"-Referenzmodells ausgeführt wird.

2. Weiterleitungsknoten nach dem vorhergehenden Anspruch, der ferner Folgendes umfasst:
wenigstens ein weiteres Zugriffsmodul (110b, 210b, 410b/c, 510b/c/d, 610b) nach Anspruch 1 und/oder
wenigstens ein weiteres Backhaul-Modul nach Anspruch 1.

3. Weiterleitungsknoten nach einem der vorhergehenden Ansprüche 1 bis 2, wobei
entweder das Backhaul-Modul (120, 220, 320, 420, 520, 620, 720) oder das Zugriffsmodul (110a, 210a, 410a, 510a, 610a, 710) konfiguriert ist, mit dem jeweils anderen des Backhaul-Moduls (120, 220, 320, 420, 520, 620, 720) und des Zugriffsmoduls (110a, 210a, 410a, 510a, 610a, 710) über ein Synchronisationssignal, das unter Verwendung der Internetprotokoll-Netzverbindung über die Zugriffsschnittstelle (114a) und die Backhaul-Schnittstelle (124) ausgetauscht wird, zu synchronisieren.

4. Weiterleitungsknoten nach einem der vorhergehenden Ansprüche 1 bis 3, wobei
das Backhaul-Modul (120, 220, 320, 420, 520, 620, 720) und das Zugriffsmodul (110a, 210a, 410a, 510a, 610a, 710) konfiguriert sind, eine sichere Internetprotokoll-Tunnelung zum Austauschen von Daten zwischen dem Backhaul-Modul (120, 220, 320, 420, 520, 620, 720) und dem Zugriffsmodul (110a, 210a, 410a, 510a, 610a, 710) über die Zugriffsschnittstelle (114a) und die Backhaul-Schnittstelle (124) auszutauschen.

5. Weiterleitungsknoten nach einem der vorhergehenden Ansprüche 1 bis 4, wobei
das Zugriffsmodul (110a, 210a, 410a, 510a, 610a, 710) einen Zugriffsspeicher zum Speichern einer IP-Adresse, die dem Zugriffsmodul (110a, 210a, 410a, 510a, 610a, 710) zugeordnet ist, umfasst und/oder
das Backhaul-Modul (120, 220, 320, 420, 520, 620, 720) einen Backhaul-Speicher zum Speichern einer IP-Adresse, die dem Backhaul-Modul (120, 220, 320, 420, 520, 620, 720) zugewiesen ist, umfasst.

6. Weiterleitungsknoten nach einem der vorhergehenden Ansprüche 1 bis 5, wobei
eine Datenverarbeitung in dem Zugriffskommunikationsteil (122) eine erste Anzahl aufeinander folgender verschiedener Schichten des "Open Systems Interconnection"-Referenzmodells betrifft und
eine Datenverarbeitung in dem Backhaul-Kommunikationsteil (112a/b) eine zweite Anzahl aufeinander folgender verschiedener Schichten des "Open-Systems Interconnection"-Referenzmodells betrifft, wobei die erste Anzahl von der zweiten Anzahl verschieden ist.

7. Weiterleitungsknoten nach einem der vorhergehenden Ansprüche 1 bis 6, wobei
das Zugriffsmodul (110a, 210a, 410a, 510a, 610a, 710) mit einer Heim-Basisstation (350) verwirklicht ist.

8. Weiterleitungsknoten nach Anspruch 1, wobei die Zugriffsschnittstelle (114a) konfiguriert ist, das Zugriffsmodul (110a, 210a, 410a, 510a, 610a, 710) mit dem Backhaul-Modul (120, 220, 320, 420, 520, 620, 720) über ein Kabel (130, 330, 430, 530) zu verbinden.

9. Weiterleitungsknoten nach Anspruch 1, wobei die Backhaul-Schnittstelle (124) konfiguriert ist, das Zugriffsmodul (110a, 210a, 410a, 510a, 610a, 710) mit dem Backhaul-Modul (120, 220, 320, 420, 520, 620, 720) über ein Kabel (130, 330, 430, 530) zu verbinden.

10. Verfahren zum Weiterleiten einer Nachricht in einem Funktelekommunikationsnetz durch einen Weiterleitungsknoten (100, 200, 300, 400, 500, 600, 700), wobei der Weiterleitungsknoten (100, 200, 300, 400, 500, 600, 700) ein Zugriffsmodul (110a, 210a, 410a, 510a, 610a, 710), das einen Zugriffskommunikationsteil (112a) zum Bereitstellen einer Funkverbindung zwischen dem Weiterleitungsknoten (100, 200, 300, 400, 500, 600, 700) und wenigstens einem Anwendergerät (290a/b, 590a, 690a, 790) und ein Backhaul-Modul (120, 220, 320, 420, 520, 620, 720), das einen Backhaul-Kommunikationsteil (122) zum Bereitstellen einer Funkverbindung zwischen dem Weiterleitungsknoten (100, 200, 300, 400, 500, 600, 700) und einer Basisstation (280, 480, 580, 680, 780) des Funktelekommunikationsnetzes enthält, umfasst, wobei das Zugriffsmodul (110a, 210a, 410a, 510a, 610a, 710) und das Backhaul-Modul (120, 220, 320, 420, 520, 620, 720) räumlich voneinander getrennt sind, wobei das Zugriffsmodul (110a, 210a, 410a, 510a, 610a, 710) und das Backhaul-Modul (120, 220, 320, 420, 520, 620, 720) mittels einer Internetprotokoll-Netzverbindung über eine Zugriffsschnittstelle (114a) und eine Backhaul-Schnittstelle (124) verbunden sind,
wobei das Verfahren Folgendes umfasst:
Empfangen der Nachricht durch den Zugriffskommunikationsteil (112a) oder den Backhaul-Kommunikationsteil (122),
Senden der Nachricht von dem einen des Zugriffskommunikationsteils (112a) und des Backhaul-Kommunikationsteils (122) mittels einer Internetprotokoll-Netzverbindung über die Zugriffsschnittstelle (114a) und die Backhaul-Schnittstelle (124) zu dem jeweils anderen des Zugriffskommunikationsteils (112a) und des Backhaul-Kommunikationsteils (122), und
Weiterleiten der Nachricht durch den jeweils anderen des Zugriffskommunikationsteils (112a) und des Backhaul-Kommunikationsteils (122), **dadurch gekennzeichnet, dass**
eine Datenverarbeitung bei dem Zugriffskommunikationsteil (112a) in allen Schichten des "Open Systems Interconnection"-Referenzmodells ausgeführt wird, während eine Datenverarbeitung in dem Backhaul-Kommunikationsteil (122) ausschließlich in der physikalischen Schicht und in der Datenverbindungsschicht des "Open Systems Interconnection"-Referenzmodells ausgeführt wird.

## Revendications

1. Un noeud relais pour un réseau de radiotélécommunication, le noeud relais (100, 200, 300, 400, 500, 600, 700) comprenant un module d'accès (110a, 210a, 410a, 510a, 610a, 710) comprenant une partie communication d'accès (112a) pour la fourniture d'une connexion radio entre le noeud relais (100, 200, 300, 400, 500, 600, 700) et au moins un équipement d'utilisateur (290a/b, 590a, 690a, 790) et
un module de backhaul (120, 220, 320, 420, 520, 620, 720), comprenant
une partie communication de backhaul (122) destinée à la fourniture d'une connexion radio entre le noeud relais (100, 200, 300, 400, 500, 600, 700) et une station de base (280, 480, 580, 680, 780) du réseau de radiotélécommunication, le module d'accès (110a, 210a, 410a, 510a, 610a, 710) et le module de backhaul (120, 220, 320, 420, 520, 620, 720) étant spatialement séparés l'un de l'autre, le module d'accès (110a, 210a, 410a, 510a, 610a, 710) et le module de backhaul (120, 220, 320, 420, 520, 620, 720) étant raccordés au moyen d'une connexion de réseau Internet Protocol (IP) par l'intermédiaire d'une interface d'accès (114a) et d'une interface de backhaul (124), **caractérisé en ce que** la partie communication d'accès (112a) comprend un processeur de données, qui est configuré de sorte qu'un traitement de données soit exécuté à l'intérieur de toutes les couches du modèle de référence Interconnexion de Systèmes Ouverts et la partie communication de backhaul (122) comprend un processeur de données qui est configuré de sorte qu'un traitement de données sur l'interface de backhaul (124) soit exécuté exclusivement à l'intérieur de la couche physique et la couche de liaison de données du modèle de référence Interconnexion de Systèmes Ouverts.

2. Le noeud relais selon la revendication précédente, comprenant en outre
au moins un autre module d'accès (110b, 210b, 410b/c, 510b/c/d, 610b) selon la revendication 1 et/ou
au moins un autre module de backhaul selon la revendication 1.

3. Le noeud relais selon l'une quelconque des revendications précédentes 1 à 2, dans lequel
un module parmi le module de backhaul (120, 220, 320, 420, 520, 620, 720) et le module d'accès (110a, 210a, 410a, 510a, 610a, 710) est configuré de façon à synchroniser l'autre module parmi le module de backhaul (120, 220, 320, 420, 520, 620, 720) et le module d'accès (110a, 210a, 410a, 510a, 610a, 710) par l'intermédiaire d'un signal de synchronisation, qui est échangé au moyen de la connexion de réseau IP par l'intermédiaire de l'interface d'accès (114a) et de l'interface de backhaul (124).

4. Le noeud relais selon l'une quelconque des revendications précédentes 1 à 3, dans lequel
le module de backhaul (120, 220, 320, 420, 520, 620, 720) et le module d'accès (110a, 210a, 410a, 510a, 610a, 710) sont configurés de façon à utiliser une tunnelisation sécurisée IP pour un échange de données entre le module de backhaul (120, 220, 320, 420, 520, 620, 720) et le module d'accès (110a, 210a, 410a, 510a, 610a, 710) par l'intermédiaire de l'interface d'accès (114a) et de l'interface de backhaul (124).

5. Le noeud relais selon l'une quelconque des revendications précédentes 1 à 4, dans lequel
le module d'accès (110a, 210a, 410a, 510a, 610a, 710) comprend une mémoire d'accès destinée à la conservation en mémoire d'une adresse IP qui est attribuée au module d'accès (110a, 210a, 410a, 510a, 610a, 710) et/ou le module de backhaul (120, 220, 320, 420, 520, 620, 720) comprend une backhaul mémoire destinée à la conservation en mémoire d'une adresse IP qui est attribuée au module de backhaul (120, 220, 320, 420, 520, 620, 720).

6. Le noeud relais selon l'une quelconque des revendications précédentes 1 à 5, dans lequel
un traitement de données à l'intérieur de la partie communication d'accès (122) implique un premier nombre de couches différentes successives du modèle de référence Interconnexion de Systèmes Ouverts, et
un traitement de données à l'intérieur de la partie communication de backhaul (112a/b) implique un deuxième nombre de couches différentes successives du modèle de référence Interconnexion de Systèmes Ouverts, le premier nombre étant différent du deuxième nombre.

7. Le noeud relais selon l'une quelconque des revendications précédentes 1 à 6, dans lequel
le module d'accès (110a, 210a, 410a, 510a, 610a, 710) est mis en oeuvre avec une station de base de rattachement (350).

8. Le noeud relais selon la revendication 1, dans lequel l'interface d'accès (114a) est configurée de façon à raccorder le module d'accès (110a, 210a, 410a, 510a, 610a, 710) au module de backhaul (120, 220, 320, 420, 520, 620, 720) par l'intermédiaire d'un câble (130, 330, 430, 530).

9. Le noeud relais selon la revendication 1, dans lequel l'interface de backhaul (124) est configurée de façon à raccorder le module d'accès (110a, 210a, 410a, 510a, 610a, 710) au module de backhaul (120, 220, 320, 420, 520, 620, 720) par l'intermédiaire d'un câble (130, 330, 430, 530).

10. Un procédé de transmission d'un message à l'intérieur d'un réseau de radiotélécommunication par un noeud relais (100, 200, 300, 400, 500, 600, 700), le noeud relais (100, 200, 300, 400, 500, 30 600, 700) comprenant un module d'accès (110a, 210a, 410a, 510a, 610a, 710) comprenant une partie communication d'accès (112a) destinée à la fourniture d'une connexion radio entre le noeud relais (100, 200, 300, 400, 500, 600, 700) et au moins un équipement d'utilisateur (290a/b, 590a, 690a, 790) et un module de backhaul (120, 220, 320, 420, 520, 620, 720), comprenant une partie communication de backhaul (122) destinée à la fourniture d'une connexion radio entre le noeud relais (100, 200, 300, 400, 500, 600, 700) et une station de base (280, 480, 580, 680, 780) du réseau de radiotélécommunication, le module d'accès (110a, 210a, 410a, 510a, 610a, 710) et le module de backhaul (120, 220, 320, 420, 520, 620, 720) étant spatialement séparés l'un de l'autre, le module d'accès (110a, 210a, 410a, 510a, 610a, 710) et le module de backhaul (120, 220, 320, 420, 520, 620, 720) étant raccordés au moyen d'une connexion de réseau IP par l'intermédiaire d'une interface d'accès (114a) et d'une interface de backhaul (124),
le procédé comprenant
la réception du message par une partie parmi la partie communication d'accès (112a) et la partie communication de backhaul (122),
la transmission du message à partir de la partie parmi la partie communication d'accès (112a) et la partie communication de backhaul (122) au moyen d'une connexion de réseau IP par l'intermédiaire de l'interface d'accès (114a) et de l'interface de backhaul (124) à l'autre partie parmi la partie communication d'accès (112a) et la partie communication de backhaul (122), et
la transmission du message par l'autre partie parmi la partie communication d'accès (112a) et la partie communication de backhaul (122), **caractérisé en ce que**
le traitement de données au niveau de la partie communication d'accès (112a) est exécuté à l'intérieur de toutes les couches du modèle de référence Interconnexion de Systèmes Ouverts tandis que le traitement de données au niveau de la partie communication de backhaul (122) est exécuté exclusivement à l'intérieur de la couche physique et de la couche de liaison de données du modèle de référence Interconnexion de Systèmes Ouverts.
